# EUROPÄISCHE PATENTSCHRIFT

(11) **EP 2 289 152 B1**
(45) Veröffentlichungstag und Bekanntmachung des Hinweises auf die Patenterteilung: **04.04.2012**
(21) Anmeldenummer: 08773848.0
(22) Anmeldetag: 26.06.2008
(51) Int. Cl.: H02K 11/00

(54) **ANORDNUNG MIT EINER ELEKTRISCHEN MASCHINE SOWIE VERFAHREN ZUM BETREIBEN EINER ELEKTRISCHEN MASCHINE**
ARRANGEMENT HAVING AN ELECTRICAL MACHINE AND METHOD FOR OPERATING AN ELECTRICAL MACHINE
AGENCEMENT COMPORTANT UNE MACHINE ÉLECTRIQUE ET PROCÉDÉ PERMETTANT DE FAIRE FONCTIONNER UNE MACHINE ÉLECTRIQUE

(43) Veröffentlichungstag der Anmeldung: 02.03.2011
(73) Patentinhaber: Siemens Aktiengesellschaft, 80333 München (DE)
(72) Erfinder: ZETTNER, Jürgen, 90567 Veitsbronn (DE)
(86) Internationale Anmeldenummer: PCT/EP2008/005441
(87) Internationale Veröffentlichungsnummer: WO 2009/155954

(56) Entgegenhaltungen:
- DE-A1- 1 945 343
- DE-A1- 10 305 368
- JP-A- 55 099 033
- JP-A- 59 085 921

## Beschreibung

In Geräten mit komplizierten Einbauverhältnissen und rauen Umgebungsbedingungen ist eine Temperaturmessung mittels Berührungsthermometern häufig nicht ohne weiteres möglich. Speziell bei elektrischen Maschinen, d.h. bei Elektromotoren und Generatoren, stellt die Temperaturmessung an rotierenden Teilen in der Praxis ein Problem dar. So ist beispielsweise eine Temperaturüberwachung des Läufers, d.h. Rotors, von Elektromotoren wünschenswert, da eine solche Überwachung eine Optimierung der Auslegung der Leistungsklasse des Elektromotors erlaubt. Hierdurch kann insbesondere eine Überdimensionierung des Motors vermieden werden. Darüber hinaus kann eine Temperaturüberwachung auch für die Steuerung des Motors verwendet werden, wodurch eine optimale Nutzung, d.h. ein besonders ökonomischer oder leistungsorientierter Betrieb, ermöglicht wird.

Üblicherweise tritt im Betrieb die Maximaltemperatur in der Mitte des Rotors auf. Jedoch können fertigungsbedingte Abweichungen die Maximaltemperatur auch an einer beliebigen anderen Stelle des Rotors entstehen lassen. Um eine schnellstmögliche Regelung beziehungsweise Anpassung durch die Motorsteuerung erzielen zu können, sollte eine Temperaturmessung möglichst aussagekräftig sein und darüber hinaus ohne eine zeitliche Verzögerung erfolgen.

Die vorliegende Erfindung betrifft eine Anordnung mit einer elektrischen Maschine, die einen durch einen Luftspalt von einem Stator beabstandeten Rotor aufweist, und mit einem Infrarot-Temperatursensor.

Eine solche Anordnung ist aus der deutschen Offenlegungsschrift DE 102 57 974 A 1 bekannt. Diese beschreibt eine Positionsmesseinrichtung zur Erfassung der Position zweier beweglicher Objekte, bei denen es sich um den Stator sowie den Rotor eines Elektromotors handeln kann. Die bekannte Positionsmesseinrichtung weist einen Infrarot-Temperatursensor auf, mit dem kontaktlos die Temperatur an mindestens einem Messpunkt des Stators beziehungsweise des Rotors bestimmt werden kann. So kann es sich bei einem verwendeten Messpunkt beispielsweise um die Motorwicklungen oder einen Punkt auf der Oberfläche der zueinander beweglichen Antriebsteile des Elektromotors handeln.

Bei dem bekannten Verfahren können die metallischen Oberflächen des Elektromotors, deren komplexe Geometrien und die an diesen Oberflächen reflektierten Umgebungsstrahler unbekannter Temperatur Messfehler verursachen. Darüber hinaus ist es mit dem bekannten Verfahren nicht möglich, eine Aussage über die Temperatur im Inneren des Stators beziehungsweise des Rotors zu gewinnen. Eine solche Aussage, insbesondere bezüglich der auftretenden Maximaltemperatur, wäre jedoch entsprechend den vorstehenden Ausführungen für eine zuverlässige und aussagekräftige Überwachung des Betriebs einer elektrischen Maschine wünschenswert.

Aus der DE 1 945 343 ist bereits eine Anordnung zur Temperaturüberwachung rotierender Teile, beispielsweise in einer Maschine, mittels kontaktlosen Erfassens der Wärmestrahlung im Luftspalt durch einen Sensor (Pyrometer) bekannt.

Auch in der JP 55 099033 und der JP 59 085921 sind ähnliche Anordnungen beschrieben.

Der vorliegenden Erfindung liegt die Aufgabe zugrunde, eine Anordnung der oben genannten Art anzugeben, die eine besonders einfache und zugleich messtechnisch genaue Messung der Temperatur, insbesondere der Maximaltemperatur, im Inneren der elektrischen Maschine ermöglicht.

Diese Aufgabe wird für eine Anordnung mit einer elektrischen Maschine, die einen durch einen Luftspalt von einem Stator beabstandeten Rotor aufweist, und mit einem Infrarot-Temperatursensor erfindungsgemäß dadurch gelöst, dass das Detektionsfeld des Infrarot-Temperatursensors auf ein Ende des Luftspalts ausgerichtet ist. Dies bedeutet, dass der Infrarot-Temperatursensor außerhalb des Luftspalts angeordnet ist und mit seinem Detektionsfeld zumindest einen Teil des Endes des üblicherweise zylindrischen Luftspalts erfasst. Zur lokalen Erhöhung des Emissionsgrades von zumindest einer dem Luftspalt zugewandten Stelle des Stators und/oder von zumindest einer dem Luftspalt zugewandten Stelle des Rotors ist eine Oberflächenbeschichtung vorgesehen.

Der Erfindung liegt die Erkenntnis zugrunde, dass am Ende des Luftspalts die an beliebiger Stelle innerhalb des Luftspalts aufgrund der jeweiligen Temperatur emittierte Infrarot-Strahlung austritt. Ursache hierfür sind Mehrfachreflektionen an den metallischen Begrenzungsflächen des Rotors und des Stators der elektrischen Maschine.

Die erfindungsgemäße Anordnung bietet insbesondere den Vorteil, dass die Messung der Temperatur am Ende des Luftspalts zwischen Stator und Rotor eine unmittelbare, d.h. nicht über Wärmeleitung zeitlich verzögerte, Messung der Temperatur der dem Spalt zugewandten Oberflächen des Rotors und des Stators ermöglicht. Da die Strahlungsleistung, die an jeder Stelle des Rotors und des Stators in den Luftspalt abgestrahlt wird, gemäß der zugrunde liegenden Physik proportional zur vierten Potenz der Temperatur ist, ist hierbei die durch den Infrarot-Temperatursensor am Ende des Luftspalts gemessene Temperatur maßgeblich durch die Maximaltemperatur der an den Luftspalt angrenzenden Oberflächen bestimmt. Dies hat zur Folge, dass die am Ende des Luftspalts gemessene Temperatur - gegebenenfalls unter Berücksichtigung einer vorhergehenden Kalibrierung oder Simulation - eine Aussage über die Temperatur, insbesondere die Maximaltemperatur, in der elektrischen Maschine erlaubt.

Das Ende des Luftspalts stellt einen Hohlraumstrahler mit variierenden Begrenzungsflächentemperaturen dar. Vorteilhafterweise wird hierbei keine Umgebungsstrahlung am Ende des Luftspalts als Störsignal reflektiert. Aufgrund dessen, dass die Metallflächen des Stators und des Rotors einen hohen Reflektionsanteil besitzen, bestimmt die gesamte innerhalb des Luftspalts entstehende Strahlung die Ausgangsstrahlung am Ende des Luftspalts, d.h. im Bereich des Detektionsfelds des Infrarot-Temperatursensors. Vorteilhafterweise vermeidet die Ausrichtung des Infrarot-Temperatursensors auf das Ende des Luftspalts somit weitgehend reflektierte Strahlung unbekannter Intensität und mittelt zugleich über die Strahlung, die aufgrund der herrschenden Temperaturen von dem Rotor sowie dem Stator emittiert werden. Dies hat zur Folge, dass es die Anordnung ermöglicht, eine Strahlungsleistung zu erfassen, die mit der höchsten vorkommenden Temperatur innerhalb der elektrischen Maschine korreliert ist. Dies ist vorteilhaft, da die am Ende des Luftspalts gemessene Temperatur es somit erlaubt, eine vergleichsweise präzise und zuverlässige Aussage über den Betriebszustand der elektrischen Maschine abzuleiten.

Entsprechend den vorstehenden Ausführungen ist die gemessene Strahlung dominiert von der Maximaltemperatur und zwar unabhängig von dem tatsächlichen Entstehungsort der Strahlung innerhalb des Luftspalts. Dies bietet den Vorteil, dass die Mitte und die Randbereiche des Luftspalts beziehungsweise der elektrischen Maschine nicht separat überwacht werden müssen. Weiterhin weist die erfindungsgemäße Anordnung fertigungstechnisch den Vorteil auf, dass eine einfache Zugänglichkeit gegeben ist, wobei insbesondere Bohrungen in der Wandung der elektrischen Maschine vermieden werden. Dabei kann die erfindungsgemäße Anordnung vorteilhafterweise flexibel für elektrische Maschinen unterschiedlicher Baugrößen und Ausprägungen eingesetzt werden. Darüber hinaus bietet die erfindungsgemäße Anordnung weiterhin den Vorteil, dass Infrarot-Temperatursensoren beliebiger Art einsetzbar sind. Bei solchen Temperatursensoren kann es sich beispielsweise um vergleichsweise günstige so genannte Thermopile-Sensoren handeln. Ein solcher Sensor ist beispielsweise aus der veröffentlichten deutschen Patentanmeldung DE 10 2004 027 393 A 1 bekannt. Aus den zuvor aufgeführten Gründen kann die erfindungsgemäße Anordnung somit insgesamt besonders kostengünstig realisiert und betrieben werden.

In einer besonders bevorzugten Ausführungsform der erfindungsgemäßen Anordnung ist der Infrarot-Temperatursensor an oder in einem stirnseitigen Lagergehäusedeckel der elektrischen Maschine angeordnet. Dies bietet den Vorteil, dass eine einfache Montage des Infrarot-Temperatursensors ermöglicht wird. Darüber hinaus wird hierdurch ein möglicher Aufwand zur Kühlung des Infrarot-Temperatursensors aufgrund seiner Entfernung zu Rotor und Stator der elektrischen Maschine vorteilhafterweise vermieden beziehungsweise reduziert.

In einer besonders bevorzugten Weiterbildung der erfindungsgemäßen Anordnung ist zur Weiterleitung von Infrarot-Strahlung zwischen dem Ende des Luftspalts und dem Infrarot-Temperatursensor ein Infrarot-Lichtleiter vorgesehen. Bei einem solchen Infrarot-Lichtleiter kann es sich vorteilhafterweise um einen vergleichsweise einfachen Infrarot-Lichtleiter, beispielsweise für den Wellenlängenbereich von etwa 1 bis 20 µm, handeln. Ein solcher Lichtleiter kann beispielsweise durch ein Metallröhrchen mit geeignetem Durchmesser, geeigneter Länge und hoher innerer Reflektion für Infrarot-Strahlung des genannten Wellenlängenbereichs realisiert werden. Hierzu kann das Metallröhrchen auf seiner Innenseite beispielsweise poliert oder beschichtet sein. Ein solchermaßen ausgeführter Infrarot-Lichtleiter leitet vorteilhafterweise die Infrarot-Strahlung am Ende des Luftspalts nahezu vollständig an den Infrarot-Temperatursensor weiter. Dabei weist der Infrarot-Lichtleiter aufgrund seiner hohen inneren Reflektion eine vergleichsweise kleine Eigentemperaturstrahlung, d.h. einen geringen Emissionsgrad, auf, so dass eine Verfälschung der Messung vorteilhafterweise vermieden wird.

Darüber hinaus wirkt der Infrarot-Lichtleiter als Abschirmung gegen Umgebungstemperaturen, d.h. Störstrahlung, die von anderen Bauteilen der elektrischen Maschine emittiert wird und ebenfalls zu einer Verfälschung der Messung führen könnte. Zusätzlich wird durch den Infrarot-Lichtleiter vorteilhafterweise auch eine Verschmutzung des Infrarot-Temperatursensors, d.h. insbesondere des Eintrittfensters des Sensors, im Betrieb vermieden beziehungsweise minimiert. Weiterhin ermöglicht es der Infrarot-Lichtleiter, dass eine aufwändige Fokussierung, beispielsweise durch optische Linsen oder fokussierende Spiegel, des Infrarot-Temperatursensors auf den Luftspalt entfallen kann. Dabei ermöglicht eine Variation der Länge des Infrarot-Lichtleiters vorteilhafterweise eine einfache Anpassung der Anordnung an elektrische Maschinen verschiedener Bauformen und Baugrößen. So bleiben die optischen Lichtleitereffekte auch bei einer Biegung des Infrarot-Lichtleiters, d.h. des Metallröhrchens, weitgehend erhalten.

Die erfindungsgemäße Anordnung ist derart ausgestaltet, dass zur lokalen Erhöhung des Emissionsgrades von zumindest einer dem Luftspalt zugewandten Stelle des Stators und/oder von zumindest einer dem Luftspalt zugewandten Stelle des Rotors eine Oberflächenbeschichtung vorgesehen ist. Als Emissionsgrad wird hierbei der Anteil der von der jeweiligen Begrenzungsfläche emittierten Strahlung im Verhältnis zu der von einem idealen Wärmestrahler, d.h. einem Schwarzen Körper, abgegebenen Strahlung bezeichnet. Bei einer Oberflächenbeschichtung kann es sich beispielsweise um eine Lackierung handeln. Eine solche Beschichtung hat zur Folge, dass die Beiträge zur Gesamtstrahlung am Ende des Luftspalts im Wesentlichen von der Temperaturstrahlung der beschichteten Stelle bestimmt werden. So ist eine lokal gewichtete Temperatur messbar, wobei die Gewichtung durch eine entsprechende Positionierung der Oberflächenbeschichtung flexibel an die jeweiligen speziellen Anforderungen angepasst werden kann.

In einer weiteren besonders bevorzugten Weiterbildung ist die erfindungsgemäße Anordnung derart ausgebildet, dass an mehreren dem Luftspalt zugewandten Stellen des Stators und/oder des Rotors spektral selektive Oberflächenbeschichtungen vorgesehen sind und der Infrarot-Temperatursensor mehrere Sensorelemente aufweist, die jeweils für eines der aufgrund der Oberflächenbeschichtungen bevorzugt abgestrahlten Wellenlängenbänder sensitiv sind. Dies bietet den Vorteil, dass mittels der spektral selektiven Oberflächenbeschichtungen eine Temperaturmessung an mehreren dem Luftspalt zugewandten Stellen des Stators beziehungsweise des Rotors ermöglicht wird. Die Detektion der jeweiligen bevorzugt abgestrahlten Wellenlängenbänder erfolgt durch entsprechend viele, jeweils bezüglich ihrer spektralen Empfindlichkeit angepasste Sensorelemente, die vorteilhafterweise in ein gemeinsames Sensorgehäuse integriert sind.

Die vorliegende Erfindung betrifft darüber hinaus ein Verfahren zum Betreiben einer elektrischen Maschine, die einen durch einen Luftspalt von einem Stator beabstandeten Rotor aufweist, wobei bei dem Verfahren mittels eines Infrarot-Temperatursensors eine Temperaturmessung an der elektrischen Maschine erfolgt.

Ein solches Verfahren ist ebenfalls aus der bereits genannten Offenlegungsschrift DE 102 57 974 A 1 bekannt.

Hinsichtlich des Verfahrens liegt der vorliegenden Erfindung die Aufgabe zugrunde, ein Verfahren der zuvor genannten Art anzugeben, das eine besonders einfache und zugleich messtechnisch genaue Messung der Temperatur, insbesondere der Maximaltemperatur, im Inneren der elektrischen Maschine ermöglicht.

Diese Aufgabe wird für ein Verfahren zum Betreiben einer elektrischen Maschine, die einen durch einen Luftspalt von einem Stator beabstandeten Rotor aufweist, wobei bei dem Verfahren mittels eines Infrarot-Temperatursensors eine Temperaturmessung an der elektrischen Maschine erfolgt, erfindungsgemäß dadurch gelöst, dass die Temperatur an einem Ende des Luftspalts gemessen wird. Zur lokalen Erhöhung des Emissionsgrades wird an zumindest einer dem Luftspalt zugewandten Stelle des Stators und/oder an zumindest einer dem Luftspalt zugewandten Stelle des Rotors eine Oberflächenbeschichtung vorgesehen.

Die Vorteile des erfindungsgemäßen Verfahrens sowie seiner im Folgenden beschriebenen bevorzugten Weiterbildungen entsprechen im Wesentlichen denjenigen der erfindungsgemäßen Anordnung beziehungsweise denjenigen der bevorzugten Weiterbildungen der erfindungsgemäßen Anordnung, so dass diesbezüglich auf die vorstehenden Ausführungen verwiesen wird.

Vorzugsweise ist das erfindungsgemäße Verfahren derart ausgestaltet, dass die Temperatur an dem Ende des Luftspalts durch einen an oder in einem stirnseitigen Lagergehäusedeckel der elektrischen Maschine angeordneten Infrarot-Temperatursensor gemessen wird.

In einer weiteren bevorzugten Ausgestaltung kann das erfindungsgemäße Verfahren vorteilhafterweise auch derart ablaufen, dass die Infrarot-Strahlung zwischen dem Ende des Luftspalts und dem Infrarot-Temperatursensor durch einen Infrarot-Lichtleiter weitergeleitet wird.

Vorteilhafterweise kann das erfindungsgemäße Verfahren auch derart ausgestaltet sein, dass die Temperatur mittels eines mehrere Sensorelemente aufweisenden Infrarot-Temperatursensors gemessen wird, wobei die Sensorelemente jeweils für unterschiedliche Wellenlängen sensitiv sind, die aufgrund von an dem Luftspalt zugewandten Stellen des Stators und/oder des Rotors vorgesehenen spektral selektiven Oberflächenbeschichtungen bevorzugt abgestrahlt werden.

Im Folgenden wird die Erfindung näher erläutert. Hierzu zeigt
- Figur 1: ein erstes Beispiel zum Verständnis der erfindungsgemäßen Anordnung,
- Figur 2: ein zweites Beispiel zum Verständnis der erfindungsgemäßen Anordnung,
- Figur 3: ein erstes Ausführungsbeispiel der erfindungsgemäßen Anordnung und
- Figur 4: ein zweites Ausführungsbeispiel der erfindungsgemäßen Anordnung.

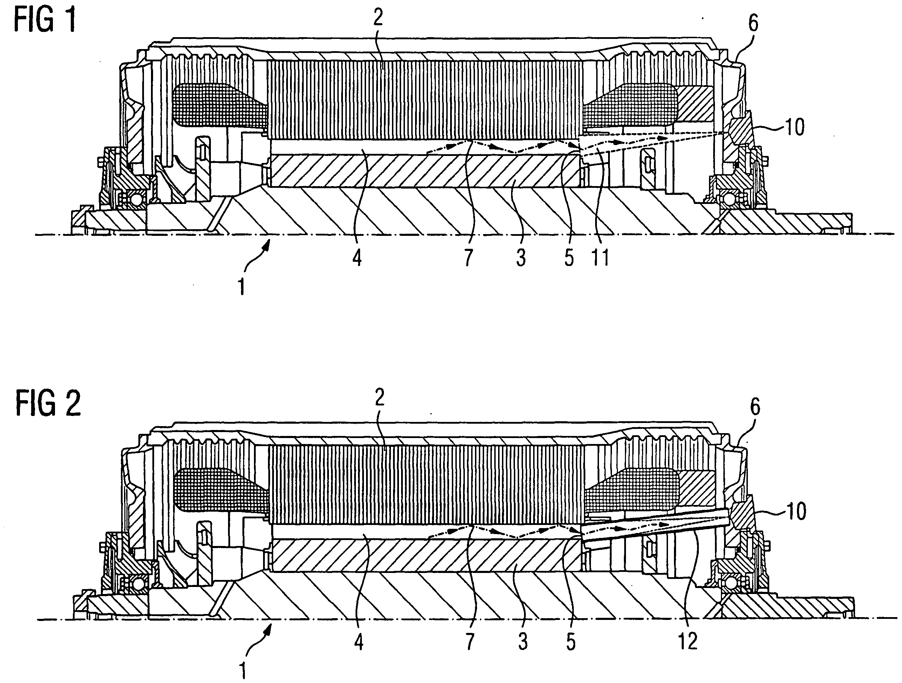

Die Figuren zeigen jeweils einen Längsschnitt der betreffenden Anordnung, wobei aus Gründen der Übersichtlichkeit in den Figuren gleiche Komponenten jeweils durch identische Bezugszeichen gekennzeichnet sind. Figur 1 zeigt ein erstes Beispiel zum Verständnis der erfindungsgemäßen Anordnung. Dargestellt ist eine elektrische Maschine 1 in Form eines Elektromotors, der einen Stator 2 und einen Rotor 3 aufweist, die durch einen Luftspalt 4 beabstandet sind.

Zur Überwachung des Betriebs des Elektromotors 1 weist die Anordnung darüber hinaus einen Infrarot-Temperatursensor 10 auf, der in einem stirnseitigen Lagergehäusedeckel 6 beziehungsweise Lagerschild des Elektromotors 1 angeordnet ist. Wie aus Figur 1 ersichtlich, ist das Detektionsfeld 11 des Infrarot-Temperatursensors 10 auf ein Ende 5 des Luftspalts 4 ausgerichtet. Dabei ist die Position des Endes 5 des Luftspalts 4 zusätzlich mit x_{L} gekennzeichnet.

Aufgrund von Mehrfachreflektionen an den metallischen Begrenzungsflächen des Stators 2 und des Rotors 3 tritt am Ende 5 des Luftspalts 4 an beliebiger Stelle innerhalb des Luftspalts 4 emittierte Infrarot-Strahlung 7 aus. Aufgrund der sich aus den physikalischen Strahlungsgesetzen ergebenden Abhängigkeit der Strahlungsleistung von der vierten Potenz der Temperatur ergibt sich hierbei, dass die am Ende 5 des Luftspalts 4 austretende Strahlungsleistung durch die Maximaltemperatur der an dem Luftspalt 4 angrenzenden Oberflächen des Stators 2 und des Rotors 3 bestimmt wird. Somit ermöglicht es die Messung der Temperatur am Ende 5 des Luftspalts 4 durch den Infrarot-Temperatursensor 10 insbesondere diese Maximaltemperatur, die ein Maß für den Betriebszustand des Elektromotors 1 darstellt, ohne Verzögerung durch Wärmeleitung, d.h. instantan, zu messen. Dabei werden vorteilhafterweise Störeffekte aufgrund der Reflektion von Strahlung unbekannter Intensität von anderen Bauteilen des Elektromotors 1 weitgehend vermieden.

Figur 2 zeigt ein zweites Beispiel zum Verständnis der erfindungsgemäßen Anordnung, das sich von dem Beispiel der Figur 1 dahingehend unterscheidet, dass die in Form des Luftspalts 4 konstruktiv vorhandene Lichtleitstrecke durch einen einfachen Infrarot-Lichtleiter bis hin zu dem Infrarot-Temperatursensor 10 verlängert worden ist. Dies bietet die Vorteile einer besonders genauen Erfassung der Temperatur sowie einer flexiblen Anwendbarkeit bei verschiedenen Baugrößen der elektrischen Maschine. Der Infrarot-Lichtleiter 12 kann beispielsweise durch ein einfaches Metallröhrchen mit geeignetem Durchmesser, geeigneter Länge und hoher innerer Reflektion realisiert werden. Durch den Infrarot-Lichtleiter 12 wird die Infrarot-Strahlung am Ende 5 des Luftspalts 4 nahezu vollständig an den Infrarot-Temperatursensor 10 weitergeleitet, wobei gleichzeitig eine Abschirmung gegenüber Wärmestrahlung der Umgebung erfolgt.

Die in Figur 2 dargestellte Anordnung bietet weiterhin den Vorteil, dass eine Beeinträchtigung der Temperaturmessung durch Verschmutzung des Infrarot-Temperatursensors 10 im Betrieb der elektrischen Maschine 1 vermieden wird. Darüber hinaus entfällt die Notwendigkeit einer Fokussierung des Detektionsfelds 11 des Infrarot-Temperatursensors auf das Ende 5 des Luftspalts 4.

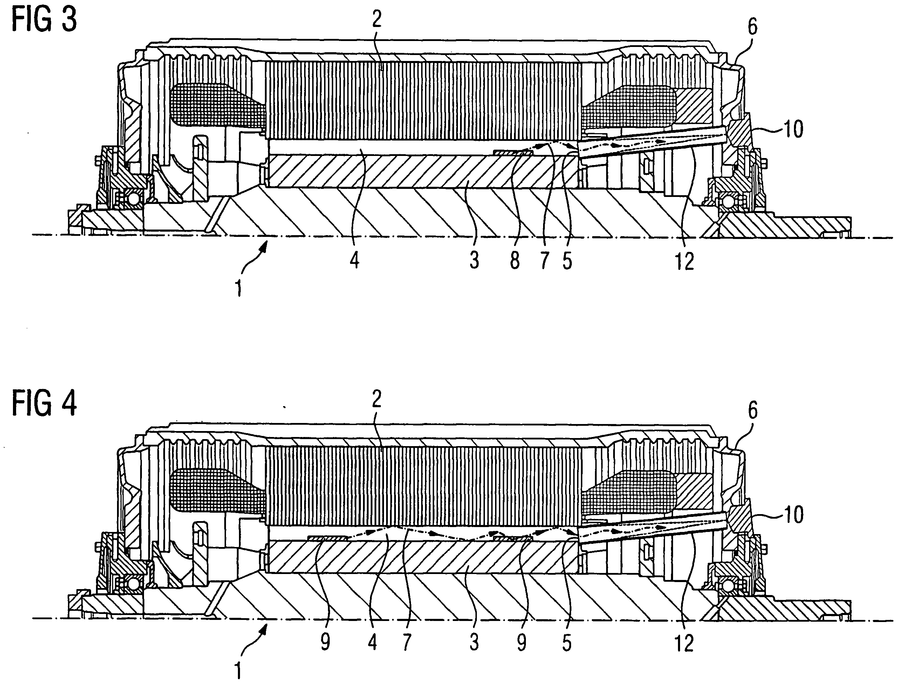

Figur 3 zeigt ein erstes Ausführungsbeispiel der erfindungsgemäßen Anordnung. Im Unterschied zu dem Beispiel der Figur 2 ist in dem Ausführungsbeispiel der Figur 3 an einer Stelle des Rotors 3 zusätzlich eine Oberflächenbeschichtung 8 in Form einer Lackierung vorgesehen. Die Oberflächenbeschichtung 8 hat zur Folge, dass der Emissionsgrad an der beschichteten Stelle wesentlich erhöht wird, d.h. die ausgesendete Strahlungsleistung wird an der betreffenden Stelle deutlich erhöht. Dies hat zur Folge, dass die am Ende 5 des Luftspalts 4 von dem Detektionsfeld des Infrarot-Temperatursensors 10 erfasste Temperaturstrahlung hauptsächlich von der Temperaturstrahlung an der Stelle der Oberflächenbeschichtung 8 bestimmt wird. Hierdurch wird es vorteilhafterweise ermöglicht, eine lokal gewichtete Temperatur zu messen: Dabei kann eine entsprechende Oberflächenbeschichtung 8 in Abhängigkeit von den jeweiligen Anforderungen und Gegebenheiten an unterschiedlichen dem Luftspalt 4 zugewandten Stellen des Stators 2 und/oder des Rotors 3 erfolgen.

Figur 4 zeigt ein zweites Ausführungsbeispiel der erfindungsgemäßen Anordnung. Im Unterschied zu dem Ausführungsbeispiel der Figur 3 sind hierbei an mehreren dem Luftspalt 4 zugewandten Stellen des Rotors 3 spektral selektive Oberflächenbeschichtungen 9 vorgesehen. Die spektral selektiven Oberflächenbeschichtungen 9 bewirken, dass jeweils unterschiedliche Infrarot-Wellenlängenbänder bevorzugt abgestrahlt werden. Die Detektion dieser Wellenlängenbänder erfolgt durch mehrere Sensorelemente des Infrarot-Temperatursensors 10, die jeweils für eines der aufgrund der spektral selektiven Oberflächenbeschichtungen 9 bevorzugt abgestrahlten Wellenlängenbänder sensitiv sind. Hierdurch wird - unter Berücksichtigung einer vorherigen Kalibrierung - eine Bestimmung der Temperatur an der Stelle der jeweiligen spektral sensitiven Oberflächenbeschichtung 9 ermöglicht.

Zusammenfassend bieten die vorstehend beschriebenen Ausführungsbeispiele der erfindungsgemäßen Anordnung sowie die jeweiligen Ausführungsbeispiele des erfindungsgemäßen Verfahrens somit den Vorteil, dass eine vergleichweise einfache, messtechnisch genaue, kostengünstige und flexibel für unterschiedliche Arten und Baugrößen von elektrischen Maschinen einsetzbare Temperaturmessung ermöglicht wird. Dabei liefert die Messung vorteilhafterweise Informationen über die Temperatur, insbesondere die Maximaltemperatur, im Inneren der elektrischen Maschine.

## Patentansprüche

1. Anordnung mit einer elektrischen Maschine (1), die einen durch einen Luftspalt (4) von einem Stator (2) beabstandeten Rotor (3) aufweist, mit einem Infrarot-Temperatursensor (10), wobei
das Detektionsfeld (11) des Infrarot-Temperatursensors (10) auf ein Ende (5) des Luftspalts (4) ausgerichtet ist
**dadurch gekennzeichnet, dass** zur lokalen Erhöhung des Emissionsgrades von zumindest einer dem Luftspalt (4) zugewandten Stelle des Stators (2) und/oder von zumindest einer dem Luftspalt (4) zugewandten Stelle des Rotors (3) eine Oberflächenbeschichtung (8) vorgesehen ist.

2. Anordnung nach Anspruch 1,
**dadurch gekennzeichnet, dass**
der Infrarot-Temperatursensor (10) an oder in einem stirnseitigen Lagergehäusedeckel (6) der elektrischen Maschine (1) angeordnet ist.

3. Anordnung nach Anspruch 1 oder 2,
**dadurch gekennzeichnet, dass**
zur Weiterleitung von Infrarot-Strahlung zwischen dem Ende (5) des Luftspalts (4) und dem Infrarot-Temperatursensor (10) ein Infrarot-Lichtleiter (12) vorgesehen ist.

4. Anordnung nach einem der Ansprüche 1 bis 3,
**dadurch gekennzeichnet, dass**
- an mehreren dem Luftspalt (4) zugewandten Stellen des Stators (2) und/oder des Rotors (3) spektral selektive Oberflächenbeschichtungen (9) vorgesehen sind und
- der Infrarot-Temperatursensor (10) mehrere Sensorelemente aufweist, die jeweils für eines der aufgrund der Oberflächenbeschichtungen (9) bevorzugt abgestrahlten Wellenlängenbänder sensitiv sind.

5. Verfahren zum Betreiben einer elektrischen Maschine (1), die einen durch einen Luftspalt (4) von einem Stator (2) beabstandeten Rotor (3) aufweist, wobei bei dem Verfahren mittels eines Infrarot-Temperatursensors (10) eine Temperaturmessung an der elektrischen Maschine (1) erfolgt, wobei die Temperatur an einem Ende (5) des Luftspalts (4) gemessen wird
**dadurch gekennzeichnet, dass**
zur lokalen Erhöhung des Emissionsgrades an zumindest einer dem Luftspalt (4) zugewandten Stelle des Stators (2) und/oder an zumindest einer dem Luftspalt (4) zugewandten Stelle des Rotors (3) eine Oberflächenbeschichtung (8) vorgesehen wird.

6. Verfahren nach Anspruch 5,
**dadurch gekennzeichnet, dass**
die Temperatur an dem Ende (5) des Luftspalts (4) durch einen an oder in einem stirnseitigen Lagergehäusedeckel (6) der elektrischen Maschine (1) angeordneten Infrarot-Temperatursensor (10) gemessen wird.

7. Verfahren nach Anspruch 5 oder 6,
**dadurch gekennzeichnet, dass**
die Infrarot-Strahlung zwischen dem Ende (5) des Luftspalts (4) und dem Infrarot-Temperatursensor (10) durch einen Infrarot-Lichtleiter (12) weitergeleitet wird.

8. Verfahren nach einem der Ansprüche 5 bis 7,
**dadurch gekennzeichnet, dass**
die Temperatur mittels eines mehrere Sensorelemente aufweisenden Infrarot-Temperatursensors (10) gemessen wird, wobei die Sensorelemente jeweils für unterschiedliche Wellenlängen sensitiv sind, die aufgrund von an dem Luftspalt (4) zugewandten Stellen des Stators (2) und/oder des Rotors (3) vorgesehenen spektral selektiven Oberflächenbeschichtungen (9) bevorzugt abgestrahlt werden.

## Claims

1. Arrangement comprising an electrical machine (1) which has a rotor (3) spaced apart from a stator (2) by means of an air gap (4) and heaving an infrared temperature sensor (10), wherein
the detection field (11) of the infrared temperature sensor (10) is aligned with one end (5) of the air gap (4),
**characterised in that**
a surface coating (8) is provided in order to effect a local increase in the emission ratio of at least one point of the stator (2) facing towards the air gap (4) and/or of at least one point of the rotor (3) facing towards the air gap (4).

2. Arrangement according to claim 1,
**characterised in that**
the infrared temperature sensor (10) is disposed on or in a face-side bearing housing cover (6) of the electrical machine (1).

3. Arrangement according to claim 1 or 2,
**characterised in that**
an infrared light guide (12) is provided for conducting infrared radiation between the end (5) of the air gap (4) and the infrared temperature sensor (10).

4. Arrangement according to one of claims 1 to 3,
**characterised in that**
- spectrally selective surface coatings (9) are provided at a plurality of points of the stator (2) and/or of the rotor (3) that face towards the air gap (4), and
- the infrared temperature sensor (10) has a plurality of sensor elements, each of which is sensitive to one of the wavelength bands emitted by preference on account of the surface coatings (9).

5. Method for operating an electrical machine (1) which has a rotor (3) spaced apart from a stator (2) by means of an air gap (4), wherein according to the method a temperature is measured at the electrical machine (1) by means of an infrared temperature sensor (10), with the temperature being measured at one end (5) of the air gap (4),
**characterised in that**
a surface coating (8) is provided in order to effect a local increase in the emission ratio at one or more points of the stator (2) that face towards the air gap (4) and/or at one or more points of the rotor (3) that face towards the air gap (4).

6. Method according to claim 5,
**characterised in that**
the temperature at the end (5) of the air gap (4) is measured by means of an infrared temperature sensor (10) disposed on or in a face-side bearing housing cover (6) of the electrical machine (1).

7. Method according to claim 5 or 6,
**characterised in that**
the infrared radiation is conducted between the end (5) of the air gap (4) and the infrared temperature sensor (10) through an infrared light guide (12).

8. Method according to claim 5 to 7,
**characterised in that**
the temperature is measured by means of an infrared temperature sensor (10) heaving a plurality of sensor elements, wherein the sensor elements are in each case sensitive to different wavelengths which are emitted by preference on account of spectrally selective surface coatings (9) provided at points of the stator (2) and/or of the rotor (3) that face towards the air gap (4).

## Revendications

1. Agencement comportant une machine électrique (1) qui comprend un rotor (3) séparé d'un stator (2) par un entrefer (4), comportant un capteur de température infrarouge (10),
le champ de détection (11) du capteur de température infrarouge (10) étant dirigé vers une extrémité (5) de l'entrefer 4),
**caractérisé en ce qu'**un revêtement superficiel (8) est prévu pour augmenter localement le degré d'émission d'au moins un endroit du stator (2) tourné vers l'entrefer (4) et/ou d'au moins un endroit du rotor (3) tourné vers l'entrefer (4).

2. Agencement selon la revendication 1, **caractérisé en ce que** le capteur de température infrarouge (10) est situé sur ou dans un couvercle de logement de palier (6) de la machine électrique (1) sur son côté frontal.

3. Agencement selon la revendication 1 ou 2, **caractérisé en ce qu'**un guide de lumière infrarouge (12) est prévu pour transmettre le rayonnement infrarouge entre l'extrémité (5) de l'entrefer (4) et le capteur de température infrarouge (10).

4. Agencement selon l'une des revendications 1 à 3, **caractérisé en ce que**
- des revêtements superficiels (9) spectralement sélectifs sont prévus en plusieurs endroits du stator (2) et/ou du rotor (3) tournés vers l'entrefer (4) et
- le capteur de température infrarouge (10) comprend plusieurs éléments de capteur qui sont sensibles à chaque fois à une des bandes de longueurs d'onde préférentiellement émises en raison des revêtements superficiels (9).

5. Procédé pour faire fonctionner une machine électrique (1) qui comprend un rotor (3) séparé d'un stator (2) par un entrefer (4), une mesure de température étant effectuée au niveau de la machine électrique (1), dans le procédé, au moyen d'un capteur de température infrarouge (10), la température étant mesurée à une extrémité (5) de l'entrefer (4),
**caractérisé en ce qu'**un revêtement superficiel (8) est prévu en au moins un endroit du stator (2) tourné vers l'entrefer (4) et/ou en au moins un endroit du rotor (3) tourné vers l'entrefer (4) pour augmenter localement le degré d'émission.

6. Procédé selon la revendication 5, **caractérisé en ce que** la température est mesurée à l'extrémité (5) de l'entrefer (4) par un capteur de température infrarouge (10) situé sur ou dans un couvercle de logement de palier (6) de la machine électrique (1) sur son côté frontal.

7. Procédé selon la revendication 5 ou 6, **caractérisé en ce que** le rayonnement infrarouge est transmis entre l'extrémité (5) de l'entrefer (4) et le capteur de température infrarouge (10) par un guide de lumière infrarouge (12).

8. Procédé selon l'une des revendications 5 à 7, **caractérisé en ce que** la température est mesurée au moyen d'un capteur de température infrarouge (10) comprenant plusieurs éléments de capteur, les éléments de capteur étant sensibles à chaque fois à des longueurs d'onde différentes qui sont émises de manière préférentielle en raison de revêtements superficiels (9) spectralement sélectifs prévus en des endroits du stator (2) et/ou du rotor (3) tournés vers l'entrefer (4).
